(19) Europäisches Patentamt
European Patent Office
Office européen des brevets

(11) **EP 4 351 947 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **22723640.3**

(22) Anmeldetag: **20.04.2022**

(51) Internationale Patentklassifikation (IPC):
**B60W 60/00** (2020.01)    **B60W 50/00** (2006.01)

(52) Gemeinsame Patentklassifikation (CPC):
**B60W 60/00; B60W 50/0098;** B60W 2050/0075;
B60W 2540/10; B60W 2540/12; B60W 2540/18;
B60W 2556/05; B60W 2556/45; B60W 2556/50

(86) Internationale Anmeldenummer:
**PCT/EP2022/060372**

(87) Internationale Veröffentlichungsnummer:
**WO 2022/258249 (15.12.2022 Gazette 2022/50)**

(54) **VERFAHREN ZUR ERMITTLUNG EINES FAHRVERHALTENS UND VERFAHREN ZUR ANPASSUNG VON REGELALGORITHMEN AUTOMATISIERTER FAHRSYSTEME**

METHOD FOR DETERMINING A DRIVING BEHAVIOUR, AND METHOD FOR ADAPTING CONTROL ALGORITHMS OF AUTOMATED DRIVING SYSTEMS

PROCÉDÉ DE DÉTERMINATION D'UN COMPORTEMENT DE CONDUITE ET PROCÉDÉ D'ADAPTATION D'ALGORITHMES DE FLUX DE COMMANDES DE SYSTÈMES DE CONDUITE AUTOMATISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2021 DE 102021002909**

(43) Veröffentlichungstag der Anmeldung:
**17.04.2024 Patentblatt 2024/16**

(73) Patentinhaber: **Mercedes-Benz Group AG 70372 Stuttgart (DE)**

(72) Erfinder:
• **PETROVIC, Andreas 70567 Stuttgart (DE)**
• **PERAUER, Cedric 72766 Reutlingen (DE)**

(74) Vertreter: **Novagraaf Group Chemin de l'Echo 3 1213 Onex / Geneva (CH)**

(56) Entgegenhaltungen:
EP-A1- 3 428 031          DE-A1- 102017 126 021
DE-A1- 102017 200 180     DE-A1- 102019 202 106
US-A1- 2015 175 168

## Beschreibung

Die Erfindung betrifft ein Verfahren zur Ermittlung eines Fahrverhaltens eines Fahrers in Relation zu einem Fahrverhalten eines automatisierten Fahrsystems eines Fahrzeugs.

Die Erfindung betrifft weiterhin ein Verfahren zur Anpassung von Regelalgorithmen automatisierter Fahrsysteme von Fahrzeugen einer Fahrzeugflotte.

Die Erfindung betrifft weiterhin eine Vorrichtung zur Anpassung von Regelalgorithmen automatisierter Fahrsysteme von Fahrzeugen einer Fahrzeugflotte.

Aus der DE 10 2015 218 361 A1 ist ein Verfahren zur Verifikation einer Fahrzeugfunktion, die dafür vorgesehen ist, ein Fahrzeug in Längs- und Querrichtung autonom zu führen, bekannt. Das Verfahren umfasst:

- Ermitteln einer Test-Steueranweisung der Fahrzeugfunktion an einen Aktuator des Fahrzeugs auf Basis von Umfelddaten bezüglich eines Umfelds des Fahrzeugs,
- Ermitteln, dass ein Fahrer des Fahrzeugs eine von der Test-Steueranweisung abweichende tatsächliche Steueranweisung tätigt, die von dem Aktuator tatsächlich umgesetzt wird,
- Simulieren einer fiktiven Verkehrssituation, die vorliegen würde, wenn anstelle der tatsächlichen Steueranweisung die Test-Steueranweisung umgesetzt worden wäre, auf Basis von Umfelddaten,
- Bestimmen, ob die fiktive Verkehrssituation ein relevantes Ereignis für einen Verkehrsteilnehmer in der Umgebung des Fahrzeugs oder für das Fahrzeug darstellt; und
- Bereitstellen von Testdaten in Bezug auf die fiktive Verkehrssituation, wenn bestimmt wurde, dass die fiktive Verkehrssituation ein relevantes Ereignis für einen Verkehrsteilnehmer in der Umgebung des Fahrzeugs oder für das Fahrzeug darstellt.

Aus der DE 10 2017 200 180 A1 ist ein Verfahren zur Verifizierung einer Fahrzeugfunktion zur zumindest zeitweisen autonomen Längs- und/oder Querführung eines Fahrzeugs bekannt. Dabei ist vorgesehen, dass in einem passiven Betrieb der Fahrzeugfunktion auf Basis von Umfelddaten eine Test-Steueranweisung für einen Aktuator erzeugt wird, die vom Aktuator nicht umgesetzt wird. Der Aktor setzt in diesem Fall eine tatsächliche Steueranweisung um, die von einem Fahrer des Fahrzeugs bewirkt wird. Eine Abweichung zwischen der nicht umgesetzten Test-Steueranweisung der Fahrzeugfunktion und der tatsächlichen Steueranweisung des Fahrers wird als Anzeichen für einen Fehler der Fahrzeugfunktion gewertet.

Aus der US 2015/175 168 A1 ist ein System zur Auswertung des autonomen Fahrens eines Fahrzeugs bekannt. Dabei ist vorgesehen, dass aus Fahrinformationen, die während einer von einem Fahrer gesteuerten Fahrt generiert werden, und aus Fahrassistenzinformationen, die sich auf Aktionen beziehen, die ein Fahrerassistenzsystem erzeugt hätte, wenn es die Fahrt gesteuert hätte, ein Scorewert berechnet wird.

Aus der DE 10 2019 202 106 A1 ist ein Verfahren zum Validieren von automatisierten Fahrfunktionen eines Fahrzeugs bekannt. Dabei ist vorgesehen, dass Steuersignale, die zur Ausführung der Fahrfunktion einem Aktor zugeführt werden, generiert aber statt dem Aktor einer Aufzeichnungsvorrichtung zugeführt werden, dass die Fahrfunktion gleichzeitig von einem Fahrer mittels eigner Steuersignale durchgeführt wird und dass die Aufzeichnungsvorrichtung die Steuersignale abspeichert, wenn sie voneinander abweichen.

Aus der DE 10 2017 126 021 A1 ist ein Verfahren zum Steuern eines Fahrzeugs bei einer automatisierten Fahrt bekannt, bei dem vorgesehen ist, dass eine für die automatisierte Fahrt optimale Trajektorie mittels eines auf einer Kostenfunktion beruhenden Optimierungsverfahrens ermittelt wird.

Aus der EP 3 428 031 A1 ist eine Vorrichtung zum Entwerfen eines Fahrerassistenzsystems bekannt, mit der potentielle Konstruktionsfehler durch Auswertung von erkannten Fahranomalien identifiziert werden.

Der Erfindung liegt die Aufgabe zu Grunde, ein neuartiges Verfahren zur Ermittlung eines Fahrverhaltens eines Fahrers in Relation zu einem Fahrverhalten eines automatisierten Fahrsystems eines Fahrzeugs anzugeben. Der Erfindung liegt weiterhin die Aufgabe zu Grunde, ein neuartiges Verfahren zur Anpassung von Regelalgorithmen automatisierter Fahrsysteme von Fahrzeugen einer Fahrzeugflotte anzugeben. Der Erfindung liegt weiterhin die Aufgabe zu Grunde, eine neuartige Vorrichtung zur Anpassung von Regelalgorithmen automatisierter Fahrsysteme von Fahrzeugen einer Fahrzeugflotte anzugeben.

Die Aufgabe wird erfindungsgemäß gelöst durch ein Verfahren zur Ermittlung eines Fahrverhaltens, welches die im Anspruch 1 angegebenen Merkmale aufweist, durch ein Verfahren zur Anpassung von Regelalgorithmen automatisierter Fahrsysteme, welches die im Anspruch 6 angegebenen Merkmale aufweist, und durch eine Vorrichtung zur Anpassung von Regelalgorithmen automatisierter Fahrsysteme, welche die im Anspruch 7 angegebenen Merkmale aufweist.

Vorteilhafte Ausgestaltungen der Erfindung sind Gegenstand der Unteransprüche.

In dem Verfahren zur Ermittlung eines Fahrverhaltens eines Fahrers in Relation zu einem Fahrverhalten eines automatisierten Fahrsystems eines Fahrzeugs werden erfindungsgemäß während eines manuellen Fahrbetriebs des Fahrzeugs Stellbefehle des Fahrers und eine manuell gefahrene Trajektorie des Fahrzeugs erfasst. In einem ersten Rechenpfad wird ermittelt, welche automatisierten Stellbefehle das automatisierte Fahrsystem an einer jeweils aktuellen Ist-Position des Fahrzeugs auf der manuell gefahrenen Trajektorie erzeugen würde, wenn das automatisierte Fahrsystem aktiv wäre. In einem zweiten Rechenpfad wird eine Trajektorie des Fahrzeugs simuliert, welche das Fahrzeug bei aktivem automatisierten Fahrsystem zurücklegen würde. In Abhängigkeit der erfassten Stellbefehle des Fahrers, der automatisierten Stellbefehle, der manuell gefahrenen Trajektorie und/oder der simulierten Trajektorie wird ein Scorewert als Maß einer Diskrepanz zwischen dem Fahrverhalten des Fahrers und dem Fahrverhalten des automatisierten Fahrsystems ermittelt, wobei der Scorewert in Abhängigkeit einer Wahrscheinlichkeit, dass das automatisierte Fahrsystem zu einem früheren Zeitpunkt eine Trajektorie als Soll-Trajektorie bestimmt hätte, welche zumindest im Wesentlichen mit der manuell gefahrenen Trajektorie übereinstimmt, ermittelt wird.

Allgemein bekannt sind bei einer Entwicklung automatisiert, insbesondere hochautomatisiert oder autonom fahrender Fahrzeuge Ansätze zur Optimierung automatisierter Fahrsysteme mittels eines so genannten Imitationsverfahrens. Hierbei wird eine Fahrweise eines Fahrers als Ideal angenommen und über eine Aufzeichnung von dessen Verhalten wird ein Verhaltensalgorithmus trainiert. Dessen Ziel ist es, das Fahrverhalten des Fahrers nachzuahmen. In kommenden Generationen automatisierter Fahrsysteme wird eine Leistungsfähigkeit der Fahrsysteme eine Leistungsfähigkeit von sicheren Durchschnittsfahrern übersteigen. Mittels des vorliegenden Verfahrens kann eine so entstehende Diskrepanz zwischen dem Fahrverhalten des Fahrers und dem Fahrverhalten des automatisierten Fahrsystems zuverlässig und exakt bestimmt werden.

Dabei kann zwischen verschiedenen Funktionsumfängen des automatisierten Fahrsystems, beispielsweise einer Einstiegsvariante und einer Variante mit vollem Funktionsumfang, unterschieden werden. Somit kann eine umfängliche Korrelation zwischen dem Fahrverhalten automatisierter Fahrsysteme mit unterschiedlichen Funktionsumfängen und dem Fahrverhalten des Fahrers gebildet werden. Dabei ermöglicht das Verfahren, das Fahrverhalten in Metriken zu berechnen, um eine Klassifizierung über das Fahrverhalten des Fahrers anzulegen. Hierbei kann eine Aufzeichnung zwischen den Fähigkeiten des automatisierten Fahrsystems und denen des Fahrers angelegt werden, welche eine Berechnung der Diskrepanz, insbesondere pro Fahrsituation, ermöglicht. Diese berechnete Diskrepanz kann zur Generierung einer Übersicht für den Fahrer verwendet werden.

Die exakte Berechnung und Bestimmung der Diskrepanz zwischen dem jeweiligen Fahrverhalten des Fahrers und des automatisierten Fahrsystems wird für folgende Anwendungen benötigt. Nutzt der Fahrer beispielsweise nur eine reduzierte Basis-Version bzw. Einstiegsvariante des automatisierten Fahrsystems, kann berechnet werden, in welchen Fahrsituationen er ein vollwertigeres Fahrsystem, das heißt ein Fahrsystem mit größerem Funktionsumfang nutzen könnte. Ebenfalls kann aufgezeigt werden, in welchen Verkehrssituationen oder auf welchen gefahrenen Strecken das Fahrsystem sicherer oder gleichwertig gefahren wäre, um das Vertrauen in die automatisierten Fahrsysteme zu stärken. Des Weiteren können die Informationen über eine Fähigkeit des Fahrers dafür genutzt werden, um so genannte Safety-Assistenzsysteme auf den jeweiligen Fahrer zu optimieren. Die komplette Information über die Leistungsfähigkeit des Fahrers und des Systems kann akkumuliert und für ein Scoring-System genutzt werden.

In einer möglichen Ausgestaltung des Verfahrens wird der Scorewert in Abhängigkeit einer Abweichung zwischen den erfassten Stellbefehlen des Fahrers und den automatisierten Stellbefehlen ermittelt. Dies ermöglicht eine einfache und zuverlässige Ermittlung des Scorewerts.

In einer weiteren möglichen Ausgestaltung des Verfahrens wird der Scorewert in Abhängigkeit einer Abweichung zwischen der manuell gefahrenen Trajektorie und der simulierten Trajektorie ermittelt. Auch dies ermöglicht eine einfache und zuverlässige Ermittlung des Scorewerts.

In einer weiteren möglichen Ausgestaltung des Verfahrens wird der Scorewert in Abhängigkeit einer Zeitdauer oder Wegstrecke, welche das Fahrzeug fahren kann, bis die Abweichung zwischen der manuell gefahrenen Trajektorie und der simulierten Trajektorie einen vorgegebenen Schwellwert erreicht, ermittelt. Auch dies ermöglicht eine einfache und zuverlässige Ermittlung des Scorewerts, wobei hierbei ein Zeitpunkt und/oder eine Position der Abweichung zwischen manuell gefahrener Trajektorie und simulierter Trajektorie ermittelt werden bzw. wird, so dass Positionen, an denen gehäuft eine statistisch relevante Diskrepanz zwischen dem Fahrverhalten des Fahrers und dem Fahrverhalten des automatisierten Fahrsystems vorliegen, ermittelt werden können.

In einer weiteren möglichen Ausgestaltung des Verfahrens wird die Abweichung zwischen der manuell gefahrenen Trajektorie und der simulierten Trajektorie anhand zumindest einer Kostenfunktion ermittelt. Hierbei können verschiedene Kostenfunktionen einzeln oder in Kombination verwendet werden, wobei die Kostenfunktionen beispielsweise einen quadratischen Fehler, einen absoluten Fehler, einen geschwindigkeitsgewichteten absoluten Fehler, einen kumulativen geschwindigkeitsgewichteten absoluten Fehler, einen quantisierten Klassifikationsfehler und/oder einen schwellwertbasierten relativen Fehler berücksichtigen. Mittels der zumindest einen Kostenfunktion kann die Abweichung und daraus folgend der Scorewert einfach und zuverlässig ermittelt werden, wobei die jeweilige Kostenfunktion in einfacher Weise durch Erweiterung an eine Komplexität der Aufgabe angepasst werden kann.

In einer weiteren möglichen Ausgestaltung des Verfahrens wird der Scorewert anhand einer Summation, beispielsweise auch einer gewichteten Summation, mehrerer, jeweils gemäß einer der vorgenannten Ausgestaltungen ermittelter Scorewerte als summierter Scorewert ermittelt. Dieser summierte Scorewert gibt insbesondere an, wie stark eine Fahrweise des Fahrers von der Fahrweise des automatisierten Fahrsystems abweicht.

Diese Information kann herangezogen werden, um eine aktuelle Fahrleistung des Fahrers zu ermitteln, insbesondere um zu ermitteln, ob der Fahrer unkonzentriert und/oder unsicher fährt. Dies ermöglicht eine Anpassung aktiver Sicherheitssysteme des Fahrzeugs an eine gegebenenfalls reduzierte Fahrleistung des Fahrers. Auch kann dem Fahrer eine Aktivierung eines automatisierten Fahrsystems angeboten werden, weil dieses eine aktuelle Fahraufgabe besser als der Fahrer selbst beherrscht.

In einer möglichen Ausgestaltung wird das Verfahren in einer Vielzahl von Fahrzeugen einer Fahrzeugflotte angewendet, um einen jeweiligen Scorewert zu ermitteln. Die ermittelten Scorewerte werden gesammelt und zur Anpassung von Regelalgorithmen automatisierter Fahrsysteme von Fahrzeugen einer Fahrzeugflotteherangezogen. Die Scorewerte werden von den Fahrzeugen ermittelt und geben jeweils ein Maß einer Diskrepanz zwischen einem Fahrverhalten eines Fahrers des Fahrzeugs und einem Fahrverhalten eines automatisierten Fahrsystems an einer jeweiligen Position des Fahrzeugs an. Die gesammelten Scorewerte werden statistisch ausgewertet und in der statistischen Auswertung werden Positionen ermittelt, an denen gehäuft eine statistisch relevante Diskrepanz zwischen dem Fahrverhalten des Fahrers und dem Fahrverhalten des automatisierten Fahrsystems vorliegt. Basierend auf einer ermittelten Häufung statistisch relevanter Diskrepanzen werden Parameter der Regelalgorithmen der automatisierten Fahrsysteme zur Reduzierung der Diskrepanzen angepasst und die angepassten Parameter werden den Fahrzeugen der Fahrzeugflotte zur Verfügung gestellt. Dies ermöglicht eine einfache und zuverlässige Anpassung der Regelalgorithmen automatisierter Fahrsysteme und somit eine verbesserte Leistungsfähigkeit und Zuverlässigkeit der automatisierten Fahrsysteme.

Ausführungsbeispiele der Erfindung werden im Folgenden anhand von Zeichnungen näher erläutert.

Dabei zeigen:

Fig. 1 schematisch ein Blockschaltbild eines Ausführungsbeispiels einer Vorrichtung zum automatisierten Fahrbetrieb eines Fahrzeugs,

Fig. 2 schematisch ein Blockschaltbild eines weiteren Ausführungsbeispiels einer Vorrichtung zum automatisierten Fahrbetrieb eines Fahrzeugs,

Fig. 3 schematisch ein Blockschaltbild eines weiteren Ausführungsbeispiels einer Vorrichtung zum automatisierten Fahrbetrieb eines Fahrzeugs,

Fig. 4 schematisch ein Blockschaltbild einer Vorrichtung zur Ermittlung eines Fahrverhaltens eines Fahrers in Relation zu einem Fahrverhalten eines automatisierten Fahrsystems eines Fahrzeugs,

Fig. 5 schematisch eine Draufsicht einer Verkehrssituation,

Fig. 6 schematisch eine reale Trajektorie eines Fahrzeugs während eines manuellen Fahrbetriebs und eine während dieses Fahrbetriebs simulierte Trajektorie,

Fig. 7 schematisch eine reale Trajektorie eines Fahrzeugs während eines manuellen Fahrbetriebs und während dieses Fahrbetriebs simulierte Trajektorien,

Fig. 8 schematisch eine reale Trajektorie eines Fahrzeugs während eines manuellen Fahrbetriebs und während dieses Fahrbetriebs simulierte Trajektorien und

Fig. 9 schematisch eine Resimulation einer Wahrscheinlichkeit für eine reale Trajektorie eines Fahrzeugs.

Einander entsprechende Teile sind in allen Figuren mit den gleichen Bezugzeichen versehen.

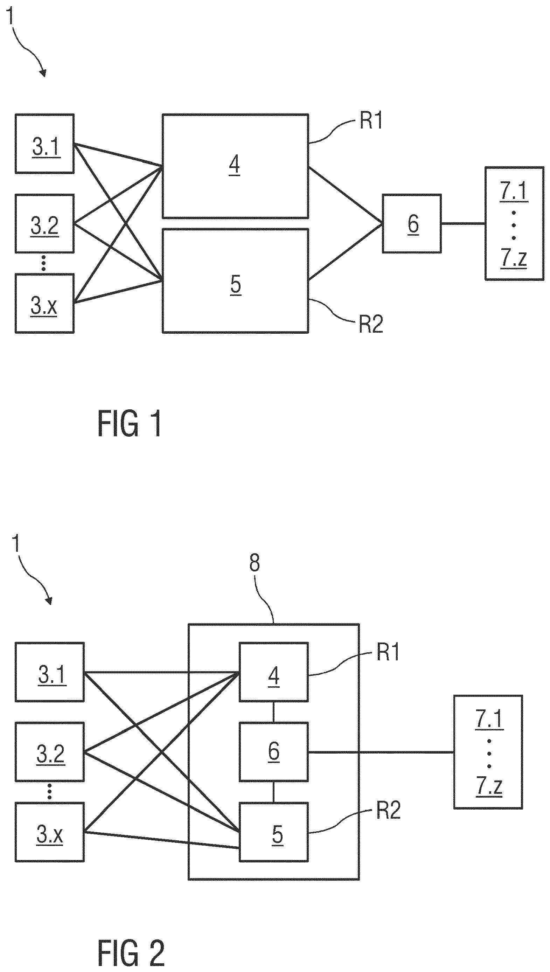

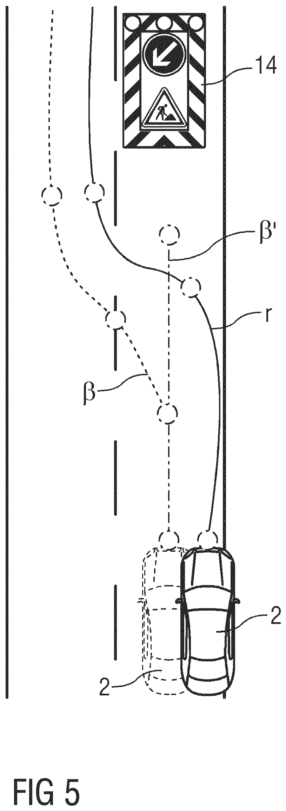

In Figur 1 ist ein Blockschaltbild eines möglichen Ausführungsbeispiels einer Vorrichtung 1 zum automatisierten, insbesondere hochautomatisierten oder autonomen, Fahrbetrieb eines in Figur 5 gezeigten Fahrzeugs 2 dargestellt.

Das Fahrzeug 2 verfügt dabei über eine vollwertige Hardware für den automatisierten Fahrbetrieb, wobei eine Leistungsfähigkeit der Hardware softwareseitig in verschiedene Ausbaustufen eingeschränkt sein kann. Dies kann in mindestens zwei Ausbaustufen, beispielsweise einer Basis-Ausbaustufe und einer hohen Ausbaustufe erfolgen. Diese Ausbaustufen unterscheiden sich dabei in einer vordefinierten Leistungsfähigkeit, welche sich durch eine Beherrschung unterschiedlicher Anwendungsfälle, so genannter Use-Cases, unterscheidet.

Die Vorrichtung 1 umfasst mehrere zu einer Umgebungserfassung ausgebildete Sensoren 3.1 bis 3.x und zumindest zwei auf einer so genannten Steuergerätebene ausgebildete Recheneinheiten 4, 5, welche jeweils eine Redundanz für die jeweils andere Recheneinheit 4, 5 bilden. Weiterhin umfasst die Vorrichtung 1 einen Komparator 6 und Aktuatoren 7.1 bis 7.z.

Die Sensoren 3.1 bis 3.x sind zu einer Erfassung einer Fahrzeugumgebung ausgebildet.

Die Recheneinheiten 4, 5 sind unabhängig voneinander für eine Ermittlung und Erzeugung von Trajektoriebäumen mit mehreren möglichen Trajektorien β, β' (dargestellten in Figur 5) ausgebildet und treffen mittels eines Optimierungsalgorithmus eine Auswahl einer Soll-Trajektorie aus einem Trajektoriebaum. Weiterhin sind die Recheneinheiten 4, 5 unabhängig voneinander für eine Ermittlung und Erzeugung von Fahrbefehlen zur Steuerung des Fahrzeugs 2 im automatisierten Fahrbetrieb anhand von mittels der Sensoren 3.1 bis 3.x erfassten Sensordaten entlang der ausgewählten Soll-Trajektorie ausgebildet und ermöglichen durch die Bildung der Redundanz eine Realisierung von vorgegebenen Sicherheitsanforderungen für den automatisierten Fahrbetrieb des Fahrzeugs 2, insbesondere eines Fahrzeugs 2 mit hohem Automatisierungsgrad. Dabei befinden sich die Recheneinheiten 4, 5 jeweils in einen Rechenpfad R1, R2.

Die Aktuatoren 7.1 bis 7.z sind zur Ausführung der mittels der Recheneinheiten 4, 5 erzeugten Fahrbefehle ausgebildet.

Dabei sind die Recheneinheiten 4, 5 mit allen Sensoren 3.1 bis 3.x gekoppelt und der Komparator 6 ist mit beiden Recheneinheiten 4, 5 gekoppelt. Die mittels beider Recheneinheiten 4, 5 aus den Sensordaten berechneten Fahrbefehle können somit dem Komparator 6 zu einem Abgleich der mittels der Recheneinheiten 4, 5 redundant durchgeführten Berechnung zur Verfügung gestellt werden. Hierbei bestimmt der Komparator 6 unter Anwendung allgemein bekannter Sicherheitsalgorithmen aus seinen Eingangsdaten einen sicheren Fahrbefehl bzw. ein sicheres Steuersignal und übermittelt diese an die Aktuatoren 7.1 bis 7.z. Dabei ist der Komparator 6 hardwareunabhängig, beispielsweise gemäß der Norm ISO 26262 in ASIL-D (ASIL = Automotive Safety Integrity Level), ausgebildet.

Figur 2 zeigt ein Blockschaltbild eines weiteren möglichen Ausführungsbeispiels einer Vorrichtung 1 zum automatisierten Fahrbetrieb des Fahrzeugs 2.

Im Unterschied zu dem in Figur 1 dargestellten Ausführungsbeispiel sind die Recheneinheiten 4, 5 und der Komparator 6 in einem gemeinsamen Steuergerät 8 ausgebildet und sind aus zumindest zwei redundant arbeitenden, voneinander unabhängigen Rechenkernen auf Chipebene, beispielsweise separaten Halbleitern, Prozessoren, Systems on Chip etc., gebildet.

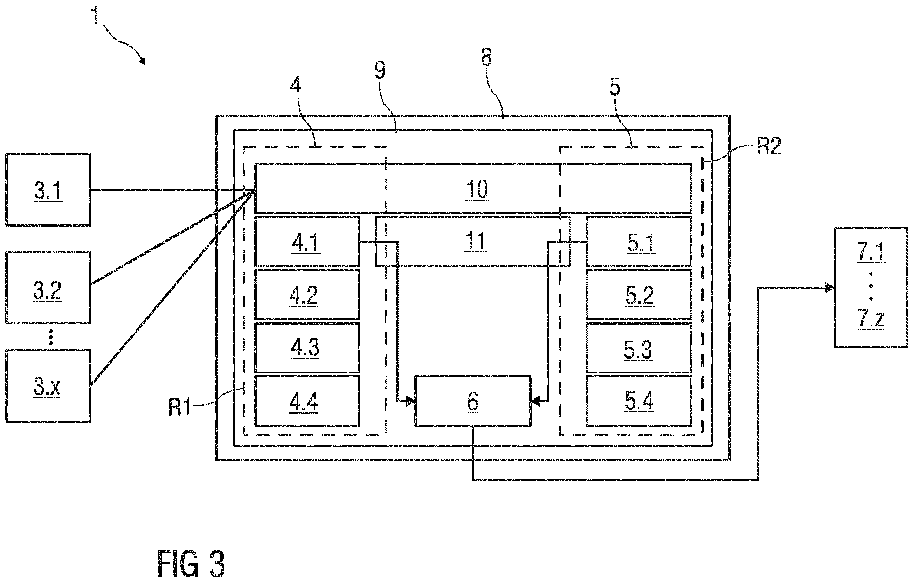

In Figur 3 ist ein Blockschaltbild eines weiteren möglichen Ausführungsbeispiels einer Vorrichtung 1 zum automatisierten Fahrbetrieb des Fahrzeugs 2 dargestellt.

Im Unterschied zu dem in Figur 2 dargestellten Ausführungsbeispiel sind die Recheneinheiten 4, 5 in dem gemeinsamen Steuergerät 8 auf einem gemeinsamen Rechenkern 9 als redundante Mehrkernarchitektur als System On Chip ausgebildet mit einer gemeinsamen Ein-/Ausgabe 10, welche die Sensordaten empfängt und an die Recheneinheiten 4, 5 ausgibt, und einer Kommunikationseinheit 11, auch als Inter-Fabric bezeichnet.

Jede Recheneinheit 4, 5 umfasst dabei insbesondere jeweils eine CPU 4.1, 5.1, eine GPU 4.2, 5.2, eine NPU 4.3, 5.3 und einen Speicher 4.4, 5.4.

Zur Ausführung eines Verfahrens zur Ermittlung eines Fahrverhaltens eines Fahrers in Relation zu einem Fahrverhalten eines automatisierten Fahrsystems des Fahrzeugs 2 wird auf die in der Vorrichtung 1 vorhandene Redundanz zurückgegriffen und diese entsprechend den folgenden Ausführungen modifiziert. Dabei gelten die Ausführungen für alle zuvor genannten und weitere geeignete Ausführungsbeispiele der Vorrichtung 1.

Ziel des Verfahrens ist es dabei, eine auf eine Fahraufgabe bezogene Leistungsfähigkeit des Fahrers anhand der Vorrichtung 1 zum automatisierten Fahrbetrieb des Fahrzeugs 2 zu ermittelten und zu quantifizieren.

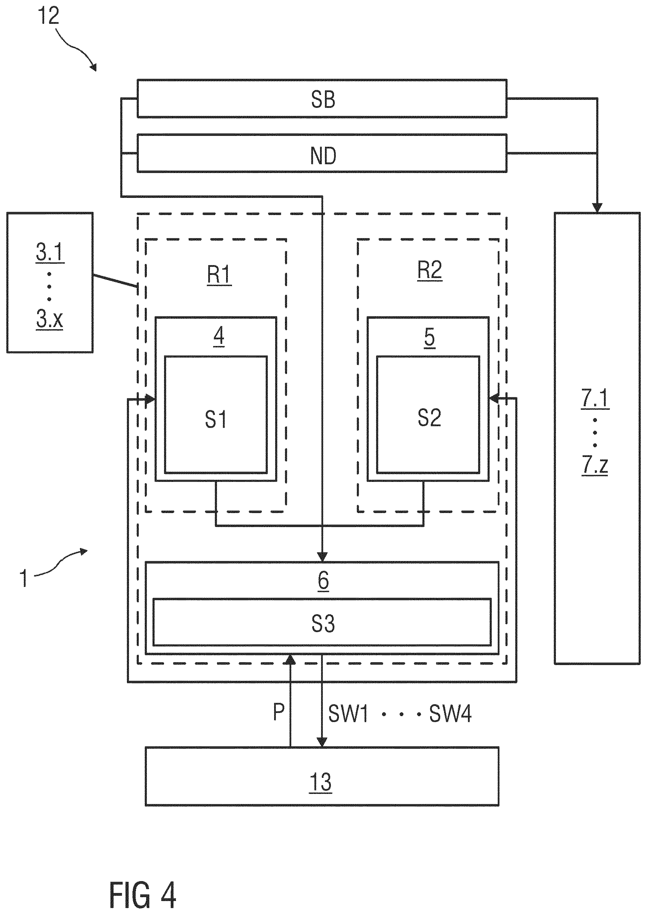

Figur 4 zeigt ein Blockschaltbild einer Vorrichtung 12 zur Ermittlung eines Fahrverhaltens eines Fahrers in Relation zu einem Fahrverhalten eines automatisierten Fahrsystems eines Fahrzeugs 2, wobei die Vorrichtung 12 eine Vorrichtung 1 zum automatisierten Fahrbetrieb des Fahrzeugs 2 gemäß den Figuren 1 bis 3 umfasst.

Die Vorrichtung 12 ist dabei derart ausgebildet, dass während eines durch den Fahrer ausgeführten manuellen Fahrbetriebs des Fahrzeugs 2 ein mittels der Vorrichtung 1 ausgeführtes assistierendes System (Basis-Ausbaustufe) oder hochautomatisiertes System (hohe Ausbaustufe) vollwertig, ausgenommen die Steuerung der Aktuatoren 7.1 bis 7.z, im Hintergrund ausgeführt wird. Das heißt, alle Sensoren 3.1 bis 3.x und weitere Hardware sowie Softwarealgorithmen werden derart ausgeführt, als würden diese das Fahrzeug 2 im automatisierten Betrieb steuern. Nur die Steuerung selbst wird nicht ausgeführt. Vielmehr werden ein Antrieb und die Aktuatoren 7.1 bis 7.z nicht durch die Vorrichtung 1 sondern durch den Fahrer angesteuert. Die Steuerung des Fahrzeugs 2 unterliegt in einem solchen Hintergrund- oder Passivbetrieb somit dem Fahrer, indem dieser über eine Lenkung, Pedalerie und gegebenenfalls weitere Eingabemittel Stellbefehle an die Aktuatoren 7.1 bis 7.z und den Antrieb übermittelt. In einer Summe an Szenarien wird der Fahrer sich in seiner Fahrweise von der Fahrweise der Vorrichtung 1 unterscheiden.

Die Vorrichtung 1 berechnet dabei in dem Passivbetrieb in Echtzeit mittels der ersten Recheneinheit 4 im ersten Rechenpfad R1 in einer Signalbildung S1 Stell- und Lenkbefehle sowie in Figur 5 näher dargestellte Trajektorien β, β'. Eingangssignale hierfür liefern die Sensoren 3.1 bis 3.x, beispielsweise Radarsensoren, Lidarsensoren, Kameras, inertiale Messeinheiten, Positionserfassungssysteme etc. Die Vorrichtung 1 lokalisiert sich dabei in Echtzeit und berechnet die Stellbefehle für eine Lenkung, eine Bremse und einen Antrieb des Fahrzeugs 2 und die geplante Trajektorie β, β'.

Das heißt, im ersten Rechenpfad R1 wird ermittelt, welche automatisierten Stellbefehle das automatisierte Fahrsystem an einer jeweils aktuellen Ist-Position des Fahrzeugs 2 auf einer in Figur 5 näher dargestellten manuell gefahrenen Trajektorie r erzeugen würde, wenn das automatisierte Fahrsystem aktiv wäre.

Ergebnisse der Signalbildung S1 werden in den Komparator 6 weitergeleitet. Dies erfolgt zu jedem Zeitschritt von vorne entsprechend einer permanenten Initialisierung.

Da das System aufgrund des Passivbetriebs nicht seine geplante Trajektorie β, β' abfahren kann, besteht eine Differenz zwischen real vom Fahrer gefahrenen Positionen und vom System erwarteten Positionen. Dieser Fehler würde sich über die Zeit aufsummieren und zur Störung des Systems führen. Aus diesem Grund korrigiert das System im ersten Rechenpfad R1 zu jedem Zeitschritt die Echtzeit-Informationen und passt die neu generierten Stellbefehle entsprechend der real gefahrenen Situation an.

Die zweite Recheneinheit 5 wird aufgrund dessen, dass im Passivbetrieb keine Redundanz erforderlich ist, dazu verwendet, im zweiten Rechenpfad R2 in einem Simulationsbetrieb S2 eine Trajektorie β, β' des Fahrzeugs 2 derart zu simulieren, als wäre das Fahrzeug 2 ausgehend von einem Startpunkt die im ersten Rechenpfad R1 ermittelte Trajektorie β, β' abgefahren, nicht die des Fahrers. Die Simulationsergebnisse werden ebenfalls in den Komparator 6 weitergeleitet.

Das heißt, in dem zweiten Rechenpfad R2 wird eine Trajektorie β, β' des Fahrzeugs 2 simuliert, welche das Fahrzeug 2 bei aktivem automatisierten Fahrsystem zurücklegen würde.

Einen summierten Fehler aus einer Differenz zwischen der real gefahrenen Trajektorie r und der im ersten Rechenpfad R1 ermittelten Trajektorie β, β' wird bis zu einem Schwellwert durch einen simulierten Input ausgeglichen und anschließend mit der Leistungsfähigkeit des Fahrers verglichen.

Innerhalb des Komparators 6 berechnet ein Algorithmus Scorewerte SW1 bis SW4 für den Fahrer und gibt die Ergebnisse zurück in die beiden Recheneinheiten 4, 5. Eine Berechnung S3 der Scorewerte SW1 bis SW4 erfolgt in Abhängigkeit der erfassten Stellbefehle SB des Fahrers und Navigationsdaten ND, der automatisierten Stellbefehle, der manuell gefahrenen Trajektorie r und der simulierten Trajektorie β, β', wobei die Scorewerte SW1 bis SW4 ein Maß einer Diskrepanz zwischen dem Fahrverhalten des Fahrers und dem Fahrverhalten des automatisierten Fahrsystems angeben. Das heißt, es werden insbesondere umgesetzte manuelle Stellbefehle und nicht umgesetzte automatisierte Stellbefehle sowie die gefahrene Trajektorie r und die simulierte Trajektorie β, β' bewertet, um zu ermitteln, inwieweit das Fahrverhalten des Fahrers von dem Fahrverhalten abweicht, das sich beim automatisierten Fahrbetrieb in der gleichen Umgebung ergeben würde.

Weiterhin werden die mittels des Komparators 6 ermittelten Scorewerte SW1 bis SW4 an ein Backend 13 übermittelt. In diesem werden Scorewerte SW1 bis SW5 einer Vielzahl von Fahrzeugen 2 einer Fahrzeugflotte gesammelt, wobei die Scorewerte SW1 bis SW4 insbesondere entsprechend der vorherigen Beschreibung von den Fahrzeugen 2 ermittelt werden. Weiterhin werden die gesammelten Scorewerte SW1 bis SW4 statistisch ausgewertet, wobei in der statistischen Auswertung Positionen ermittelt werden, an denen gehäuft eine statistisch relevante Diskrepanz zwischen dem Fahrverhalten des Fahrers und dem Fahrverhalten des automatisierten Fahrsystems vorliegt. Basierend auf einer ermittelten Häufung statistisch relevanter Diskrepanzen werden dann Parameter P der Regelalgorithmen der automatisierten Fahrsysteme zur Reduzierung der Diskrepanzen angepasst und die angepassten Parameter P werden den Fahrzeugen 2 der Fahrzeugflotte zur Verfügung gestellt.

In Figur 5 ist eine Draufsicht einer Verkehrssituation mit einem Fahrzeug 2, welches sich einem Hindernis 14 nähert, dargestellt.

Das Fahrzeug 2 wird dabei entsprechend der Beschreibung zu Figur 3 in dem manuellen Fahrbetrieb von dem Fahrer gesteuert und folgt dabei real einer Trajektorie r.

Gleichzeitig werden von der Vorrichtung 12, ebenfalls analog zur Beschreibung gemäß Figur 3, in der Basis-Ausbaustufe eine Trajektorie β' und in der hohen Ausbaustufe, das heißt als hochautomatisiertes System, die Trajektorie β berechnet, wobei das hochautomatisierte System zur Ausführung komplexerer Manöver als ein System in der Basis-Ausbaustufe in der Lage ist.

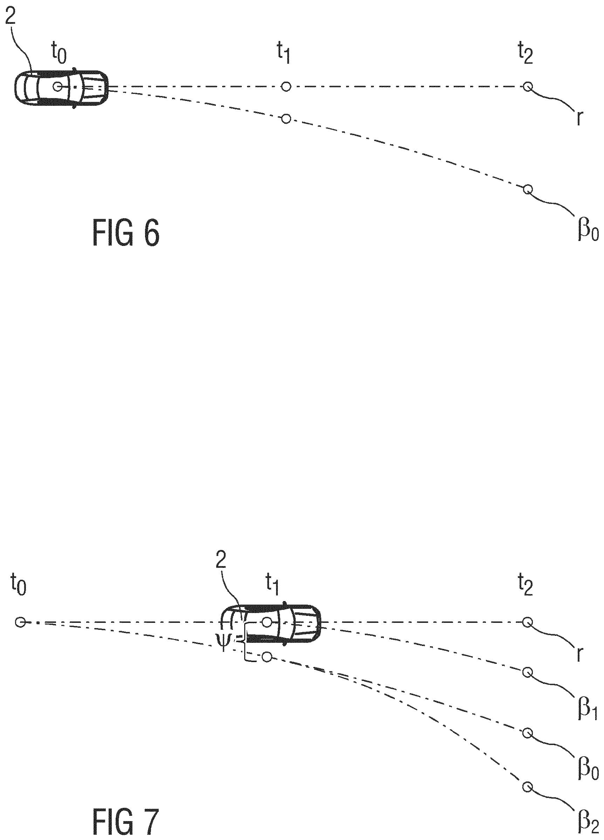

Figur 6 zeigt eine real gefahrene Trajektorie r eines Fahrzeugs 2 während eines manuellen Fahrbetriebs desselben und eine während dieses Fahrbetriebs simulierte Trajektorie $\beta_0$ zu unterschiedlichen Zeitpunkten $t_0$ bis $t_2$.

Zur Bestimmung eines ersten Scorewerts SW1 ermittelt die erste Recheneinheit 4 im ersten Rechenpfad R1 zu einem ersten Zeitpunkt $t_0$ ausgehend von einer zu diesem Zeitpunkt $t_0$ aktuellen Fahrzeug-Istposition als Soll-Trajektorie eine Trajektorie $\beta_0$. Die Trajektorie r liegt in der Zukunft und steht als Information nicht zur Verfügung. Weiterhin ermittelt die Recheneinheit 4 die Stellbefehle, die an der aktuellen Fahrzeug-Istposition für die Aktuatoren 7.1 bis 7.z erzeugt werden müssen, wenn das Fahrzeug 2 entlang der Trajektorie $\beta_0$ geführt werden soll.

Es wird dann die Abweichung zwischen den vom Fahrer an der Fahrzeug-Istposition erzeugten manuellen Stellbefehlen SB und den von der ersten Recheneinheit 4 an der gleichen Position erzeugten automatisierten Stellbefehlen ermittelt. Es wird somit die Abweichung zwischen dem, was der Fahrer an der Fahrzeug-Istpositon macht, und dem, was die erste Recheneinheit 4 an der Fahrzeug-Istposition machen würde, ermittelt.

Die Abweichung kann im einfachsten Fall durch Differenzbildung ermittelt werden. Bei mehreren Werten der Abweichung kann durch eine Mittelwertbildung eine mittlere Abweichung ermittelt werden. Beispielsweise ist es möglich, eine Abweichung zwischen Stellbefehlen für eine Längsbewegung des Fahrzeugs 2 und eine Abweichung zwischen Stellbefehlen für eine Querbewegung des Fahrzeugs 2 bei der Mittelwertbildung unterschiedlich zu gewichten, insbesondere geschwindigkeitsabhängig zu gewichten. Die Mittelwertbildung kann dabei eine Bildung eines arithmetischen Mittelwerts oder eines quadratischen Mittelwerts umfassen.

Für die ermittelte Abweichung wird der erste Scorewert SW1 ermittelt, beispielsweise mittels einer vorgegebenen Look-up-Tabelle. Dieser erste Scorewert SW1 ist umso größer, je größer die ermittelte Abweichung ist.

Der erste Scorewert SW1 ist somit ein Maß für die Abweichung der manuellen Stellbefehle SB von den automatisierten Stellbefehlen, die das automatisierte Fahrsystem ausführen würde, wenn es aktiv wäre.

Diese beschriebene Vorgehensweise zur Ermittlung des ersten Scorewerts SW1 wird zyklisch wiederholt.

In Figur 7 sind eine real gefahrene Trajektorie r eines Fahrzeugs 2 während eines manuellen Fahrbetriebs desselben und während dieses Fahrbetriebs simulierte Trajektorien $\beta_0$, $\beta_1$, $\beta_2$ zu unterschiedlichen Zeitpunkten $t_0$ bis $t_2$ dargestellt.

Die Fahrzeug-Istposition zum ersten Zeitpunkt $t_0$ ist die Startposition für die in der zweiten Recheneinheit 5 durchgeführte Simulation. Dabei wird zum ersten Zeitpunkt $t_0$ die als Soll-Trajektorie ausgebildete Trajektorie $\beta_0$ ermittelt, entlang der sich das Fahrzeug 2 bewegen soll.

Durch die Simulation wird eine simulierte Position ermittelt, an der das Fahrzeug 2 sich einen Zeitschritt später, zum Zeitpunkt $t_1$, befinden wird. Zum Zeitpunkt $t_1$ wird die Abweichung zwischen der Fahrzeug-Istposition zu diesem Zeitpunkt $t_1$ und der für diesen Zeitpunkt $t_1$ ermittelten simulierten Position ermittelt.

Zum Zeitpunkt $t_1$ wird dann eine neue als Soll-Trajektorie ausgebildete Trajektorie $\beta_2$ berechnet, welche theoretisch mit der zuvor ermittelten Trajektorie $\beta_0$ übereinstimmen kann. Die Berechnung basiert auf den zu diesem Zeitpunkt $t_1$ erfassten neuen Sensordaten und auf der Annahme, dass das Fahrzeug 2 sich zum Zeitpunkt $t_1$ tatsächlich an der simulierten Position befindet.

Diese Rechenschritte werden für die nächsten Zeitschritte solange wiederholt, bis die ermittelte Abweichung eine vorgegebene Schwelle $\xi$ übersteigt. Dies ist beispielsweise zu einem Zeitpunkt $t_x$ der Fall. Einen Zeitschritt später, zum Zeitpunkt $t_{x+1}$, wird die Simulation neu gestartet mit der dann aktuellen Fahrzeug-Istposition als neue Startposition. Dies ist erforderlich, da ein Drift zwischen simulierter Position und den realen Sensordaten zu einer Parallaxe führt, die ab der Schwelle $\xi$ nicht mehr ausgeglichen werden kann.

Die für die Zeitpunkte $t_1$ bis $t_x$ ermittelten Abweichungen werden mit einer Kostenfunktion $\Psi$ gemäß folgender Tabelle bewertet, beispielsweise mit der mittleren quadratischen Fehlerfunktion:

Tabelle 1

| Metric name | Parameters | Metric definition |
|---|---|---|
| Squared error | - | $\frac{1}{|V|} \sum_{i \in V} \|a_i - \hat{a}_i\|^2$ |
| Absolute error | - | $\frac{1}{|V|} \sum_{i \in V} \|a_i - \hat{a}_i\|_1$ |
| Speed-weighted absolute error | - | $\frac{1}{|V|} \sum_{i \in V} \|a_i - \hat{a}_i\|_1 v_i$ |
| Cumulative speed-weighted absolute error | $T$ | $\frac{1}{|V|} \sum_{i \in V} \| \sum_{t=0}^{T} (a_{i+t} - \hat{a}_{i+t}) v_{i+t} \|_1$ |
| Quantized classification error | $\sigma$ | $\frac{1}{|V|} \sum_{i \in V} (1 - \delta(Q(a_i, \sigma), Q(\hat{a}_i, \sigma)))$ |
| Thresholded relative error | $\alpha$ | $\frac{1}{|V|} \sum_{i \in V} \theta(\|\hat{a}_i - a_i\| - \alpha\|a_i\|)$ |

Für das Ergebnis, das dabei erhalten wird, wird ein zweiter Scorewert SW2 ermittelt, beispielsweise mittels einer Look-up-Tabelle.

Der zweite Scorewert SW2 ist somit ein Maß für die Abweichung zwischen der tatsächlich gefahrenen Trajektorie r und der in der zweiten Recheneinheit 5 simulierten Trajektorie $\beta_0$, $\beta_1$, $\beta_2$.

Der zweite Scorewert SW2 wird beispielsweise in einer Matrix festgehalten, wobei alle Trajektorien $\beta_x$ zu r über alle $t_x$ und die davon abhängige Kostenfunktion $\Psi$ die Einträge sind. Die Summation aller Matrizen zum zweiten Scorewert SW2 gemäß

$$\begin{pmatrix} \Psi(\beta_0(\sum_{\Psi \geq \xi} t_i)) \\ \vdots \\ \vdots \\ \Psi(\beta_i(\sum_{\Psi \geq \xi} t_i)) \end{pmatrix} \qquad (1)$$

wird zu einer Gesamt-Leistungsbestimmung herangezogen und an das Backend 13 übermittelt. Je divergenter die Trajektorien $\beta_x$ von der real gefahrenen Trajektorie r sind, da heißt die Kostenfunktion $\Psi$ steigt, desto schlechter wird der zweite Scorewert SW2 für den Fahrer.

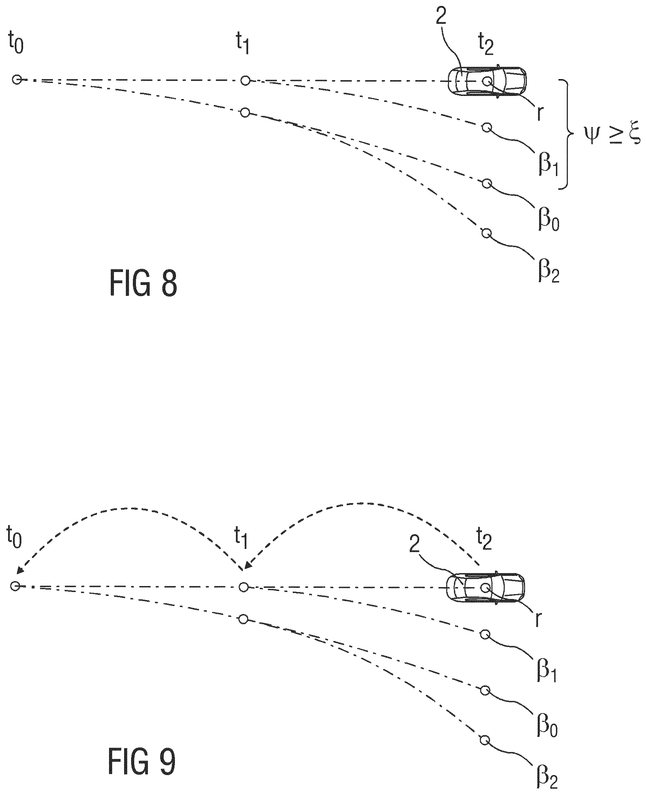

In Figur 8 sind eine real gefahrene Trajektorie r eines Fahrzeugs 2 während eines manuellen Fahrbetriebs desselben und während dieses Fahrbetriebs simulierte Trajektorien $\beta_0$, $\beta_1$, $\beta_2$ zu unterschiedlichen Zeitpunkten $t_0$ bis $t_2$ dargestellt.

Übersteigt die Schwelle $\xi$ die Kostenfunktion $\Psi$ für die Trajektorie $\beta_0$, wird ein aktueller Simulationszyklus im zweiten Rechenpfad R2 beendet. Eine erreichte Zeitschrittdauer fließt in einen dritten Scorewert SW3 ein. Je länger die Trajektorie $\beta_0$ unterhalb der Schwelle $\xi$ liegt, desto besser ist der dritte Scorewert SW3 für den Fahrer.

Das heißt, es wird ermittelt, wie lange oder wie weit das Fahrzeug 2 ab dem ersten Zeitpunkt $t_0$ fahren kann, bis die Abweichung zwischen der tatsächlichen Fahrzeug-Istposition und der von der zweiten Recheneinheit 5 simulierten Position die vorgegebene Schwelle $\xi$ übersteigt. Es wird also die zwischen den Zeitpunkten $t_0$ und $t_x$ verstrichene Zeitdauer ermittelt oder die vom Fahrzeug 2 während dieser Zeitdauer zurückgelegte Wegstrecke. Für die ermittelte Zeitdauer bzw. Wegstrecke wird der dritte Scorewert SW3 ermittelt, beispielsweise mittels einer Look-up-Tabelle.

Der dritte Scorewert SW3 ist somit ein Maß für die Zeitdauer oder Wegstrecke, die das Fahrzeug 2 fahren kann, bis die Abweichung zwischen der manuell gefahrenen Trajektorie r und der simulierten Trajektorie $\beta_x$ die vorgegebene Schwelle $\xi$ erreicht.

Bevor im zweiten Rechenpfad R2 die Simulation neu anläuft, erfolgt zum Zeitpunkt $t_x$ an dem die vorgegebene Schwelle $\xi$ für die simulierte Trajektorie $\beta_x$ überschritten wurde eine Resimulation gemäß Figur 9. Hier werden die reale Fahrzeugposition und ein realer Fahrzeugzustand zum Zeitpunkt $t_x$, vorliegend zum Zeitpunkt $t_2$, verwendet, um zurück zu rechnen, welche Gegebenheiten erfüllt sein hätten müssen, dass das System von einem realen Zustand zum Zeitpunkt $t_2$ zu einem Zustand im automatisierten Betrieb zum gleichen Zeitpunkt $t_2$ gelangt wäre.

In dem Entscheidungsraum zum Zeitpunkt $t_0$ erhalten alle potentiell mögliche Trajektorien $\beta_x$ eine Wahrscheinlichkeitsgewichtung. Die Trajektorie $\beta_x$ mit der besten Wahrscheinlichkeit wählt das System und diese wird als Trajektorie $\beta_0$ ausgegeben.

Alle potentiell fahrbaren Trajektorien $\beta_x$ spannen einen Entscheidungsraum des Systems auf. Im statistischen Sinn unwahrscheinliche Trajektorien $\beta_x$ werden verworfen.

Für die Berechnung eines vierten Scorewerts SW4 wird die Wahrscheinlichkeitsgewichtung der tatsächlich gefahrenen Trajektorie r im Entscheidungsraum retrospektiv berechnet. Das heißt, welche Wahrscheinlichkeit hat das System der Trajektorie r des Fahrers ursprünglich berechnet, bevor sie gefahren wurde. Je schlechter die Gewichtung der realen Trajektorie r, desto schlechter der vierte Scorewert SW4 für den Fahrer.

Das heißt, wenn die vorgegebene Schwelle $\xi$ zum Zeitpunkt $t_x$ überschritten wird, wird rückschauend die Wahrscheinlichkeit ermittelt, mit der die erste Recheneinheit 4 zu einem früheren Zeitpunkt $t_0$, $t_1$, $t_2$, aus dem Trajektorienbaum eine Trajektorie $\beta_x$ als Soll-Trajektorie ausgewählt hätte, die im Wesentlichen mit der tatsächlich zurückgelegten Trajektorie r übereinstimmt. Für die ermittelte Wahrscheinlichkeit wird der vierte Scorewert SW4 bestimmt, beispielsweise anhand einer Look-up-Tabelle.

Die vier ermittelten Scorewerte SW1 bis SW4 werden anschließend summiert. Eine gewichtete Summation ist ebenfalls denkbar. Der summierte Scorewert gibt an, wie stark die Fahrweise des Fahrers sich von der Fahrweise des automatisierten Fahrsystems unterscheidet. Diese Information kann herangezogen werden, um die aktuelle Fahrleistung des Fahrers zu ermitteln, insbesondere um zu ermitteln, ob der Fahrer unkonzentriert und unsicher fährt, und um aktive Sicherheitssysteme an eine gegebenenfalls reduzierte Fahrleistung des Fahrers anzupassen oder um dem Fahrer die Aktivierung des automatisierten Fahrsystems anzubieten, weil dieses aktuell sicherer als der Fahrer fährt.

Der summierte Scorewert kann auch zusammen mit der Position, an der er ermittelt wurde, dem Backend 13 zugeführt werden. Auf dem Backend 13 kann dann durch eine statistische Auswertung ermittelt werden, ob an einer bestimmten Position eine Häufung der Diskrepanzen zwischen den Fahrweisen vieler Fahrer und der Fahrweise des automatisierten Fahrsystems besteht, um gegebenenfalls die Algorithmen des automatisierten Fahrsystems zu verbessern.

Wenn beispielsweise festgestellt wird, dass das Fahrverhalten der Fahrer sich an einem Kreisverkehr häufig vom Fahrverhalten des automatisierten Fahrsystems wesentlich unterscheidet, dann kann diese Information als Indiz dafür verwendet werden, dass eine Optimierung der Algorithmen des Fahrsystems für den Betrieb an diesem Kreisverkehr sinnvoll wäre.

Wenn der Fahrer kompetent ist, dann kann anhand der Scorewerte SW1 bis SW4 erkannt werden, ob das automatisierte Fahrsystem sich so gut wie der kompetente Fahrer oder schlechter als der kompetente Fahrer verhält. Die Scorewerte SW1 bis SW4 können dann verwendet werden, um die Algorithmen des automatisierten Fahrsystems derart zu optimieren, dass das Fahrverhalten des automatisierten Fahrsystems dem Fahrverhalten des kompetenten Fahrers angeglichen wird.

**Patentansprüche**

1. Verfahren zur Ermittlung eines Fahrverhaltens eines Fahrers in Relation zu einem Fahrverhalten eines automatisierten Fahrsystems eines Fahrzeugs (2),
   **dadurch gekennzeichnet, dass** während eines manuellen Fahrbetriebs des Fahrzeugs (2)

   - Stellbefehle (SB) des Fahrers und eine manuell gefahrene Trajektorie (r) des Fahrzeugs (2) erfasst werden,
   - in einem ersten Rechenpfad (R1) ermittelt wird, welche automatisierten Stellbefehle das automatisierte Fahrsystem an einer jeweils aktuellen Ist-Position des Fahrzeugs (2) auf der manuell gefahrenen Trajektorie (r) erzeugen würde, wenn das automatisierte Fahrsystem aktiv wäre,
   - in einem zweiten Rechenpfad (R2) eine Trajektorie ($\beta$, $\beta$', $\beta_0$ bis $\beta_2$) des Fahrzeugs (2) simuliert wird, welche das Fahrzeug (2) bei aktivem automatisierten Fahrsystem zurücklegen würde, und
   - in Abhängigkeit der erfassten Stellbefehle (SB) des Fahrers sowie der automatisierten Stellbefehle und/oder der manuell gefahrenen Trajektorie (r) sowie der simulierten Trajektorie ($\beta$, $\beta$', $\beta_0$ bis $\beta_2$) zumindest ein Scorewert (SW1 bis SW4) als Maß einer Diskrepanz zwischen dem Fahrverhalten des Fahrers und dem Fahrverhalten des automatisierten Fahrsystems ermittelt wird, wobei der Scorewert (SW1 bis SW4) in Abhängigkeit einer Wahrscheinlichkeit, dass das automatisierte Fahrsystem zu einem früheren Zeitpunkt ($t_0$, $t_1$, $t_2$) eine Trajektorie ($\beta$, $\beta$', $\beta_0$ bis $\beta_2$) als Soll-Trajektorie bestimmt hätte, welche zumindest im Wesentlichen mit der manuell gefahrenen Trajektorie (r) übereinstimmt, ermittelt wird.

2. Verfahren nach Anspruch 1,
   **dadurch gekennzeichnet, dass** der Scorewert (SW1 bis SW4) in Abhängigkeit einer Abweichung zwischen den erfassten Stellbefehlen (SB) des Fahrers und den automatisierten Stellbefehlen ermittelt wird.

3. Verfahren nach Anspruch 1 oder 2,
   **dadurch gekennzeichnet, dass** der Scorewert (SW1 bis SW4) in Abhängigkeit einer Abweichung zwischen der manuell gefahrenen Trajektorie (r) und der simulierten Trajektorie ($\beta$, $\beta$', $\beta_0$ bis $\beta_2$) ermittelt wird.

4. Verfahren nach Anspruch 3,
   **dadurch gekennzeichnet, dass** der Scorewert (SW1 bis SW4) in Abhängigkeit einer Zeitdauer oder Wegstrecke, welche das Fahrzeug (2) fahren kann, bis die Abweichung zwischen der manuell gefahrenen Trajektorie (r) und der simulierten Trajektorie ($\beta$, $\beta$', $\beta_0$ bis $\beta_2$) eine vorgegebene Schwelle ($\xi$) erreicht, ermittelt wird.

5. Verfahren nach Anspruch 3 oder 4,
   **dadurch gekennzeichnet, dass** die Abweichung zwischen der manuell gefahrenen Trajektorie (r) und der simulierten Trajektorie ($\beta$, $\beta$', $\beta_0$ bis $\beta_2$) anhand zumindest einer Kostenfunktion ($\Psi$) ermittelt wird.

6. Verfahren nach einem der vorhergehenden Ansprüche,
   **dadurch gekennzeichnet, dass**
   es in einer Vielzahl von Fahrzeugen (2) einer Fahrzeugflotte zur Ermittlung eines jeweiligen Scorewerts (SW1 bis SW4) angewendet wird und dass die ermittelten Scorewerte (SW1 bis SW4) zur Anpassung von Regelalgorithmen automatisierter Fahrsysteme der Fahrzeuge (2) der Fahrzeugflotte herangezogen werden, indem

   - die Scorewerte (SW1 bis SW4) der Vielzahl von Fahrzeugen (2) der Fahrzeugflotte gesammelt werden, wobei die Scorewerte (SW1 bis SW4) von den Fahrzeugen (2) ermittelt werden und jeweils ein Maß einer Diskrepanz zwischen einem Fahrverhalten eines Fahrers des Fahrzeugs (2) und einem Fahrverhalten eines automatisierten Fahrsystems an einer jeweiligen Position des Fahrzeugs (2) angeben,
   - die gesammelten Scorewerte (SW1 bis SW4) statistisch ausgewertet werden und in der statistischen Auswertung Positionen ermittelt werden, an denen gehäuft eine statistisch relevante Diskrepanz zwischen dem Fahrverhalten des Fahrers und dem Fahrverhalten des automatisierten Fahrsystems vorliegt,
- basierend auf einer ermittelten Häufung statistisch relevanter Diskrepanzen Parameter (P) der Regelalgorithmen der automatisierten Fahrsysteme zur Reduzierung der Diskrepanzen angepasst werden und
- die angepassten Parameter (P) den Fahrzeugen (2) der Fahrzeugflotte zur Verfügung gestellt werden.

7. Vorrichtung (12), ausgebildet zur Durchführung eines Verfahrens nach Anspruch 6 .


**Claims**

1. Method for determining a driving behavior of a driver in relation to a driving behavior of an automated driving system of a vehicle (2),
   **characterized in that** during a manual driving operation of the vehicle (2)

   - actuating commands (SB) from the driver and a manually driven trajectory (r) of the vehicle (2) are detected,
   - in a first calculation path (R1), it is determined which automated actuating commands the automated driving system would generate at a current actual position of the vehicle (2) on the manually driven trajectory (r) if the automated driving system were active,
   - in a second calculation path (R2), a trajectory ($\beta$, $\beta'$, $\beta_0$ to $\beta_2$) of the vehicle (2), which the vehicle (2) would cover when the automated driving system is active, is simulated, and
   - depending on the detected actuating commands (SB) from the driver as well as the automated actuating commands and/or the manually driven trajectory (r) as well as the simulated trajectory ($\beta$, $\beta'$, $\beta_0$ to $\beta_2$), at least one score value (SW1 to SW4) is determined as a measure of a discrepancy between the driving behavior of the driver and the driving behavior of the automated driving system, the score value (SW1 to SW4) being determined based on a probability that the automated driving system would have, at an earlier point in time ($t_0$, $t_1$, $t_2$), specified a trajectory ($\beta$, $\beta'$, $\beta_0$ to $\beta_2$) which at least substantially corresponds to the manually driven trajectory (r) as the target trajectory.

2. Method according to claim 1,
   **characterized in that** the score value (SW1 to SW4) is determined depending on a deviation between the detected actuating commands (SB) from the driver and the automated actuating commands.

3. Method according to either claim 1 or claim 2,
   **characterized in that** the score value (SW1 to SW4) is determined depending on a deviation between the manually driven trajectory (r) and the simulated trajectory ($\beta$, $\beta'$, $\beta_0$ to $\beta_2$).

4. Method according to claim 3,
   **characterized in that** the score value (SW1 to SW4) is determined depending on a period of time or distance that the vehicle (2) can travel until the deviation between the manually driven trajectory (r) and the simulated trajectory ($\beta$, $\beta'$, $\beta_0$ to $\beta_2$) reaches a specified threshold ($\xi$).

5. Method according to either claim 3 or claim 4,
   **characterized in that** the deviation between the manually driven trajectory (r) and the simulated trajectory ($\beta$, $\beta'$, $\beta_0$ to $\beta_2$) is determined using at least one cost function ($\Psi$).

6. Method according to any of the preceding claims,
   **characterized in that**
   it is used in a plurality of vehicles (2) of a vehicle fleet to determine a corresponding score value (SW1 to SW4) **and in that** the determined score values (SW1 to SW4) are used to adjust control algorithms of automated driving systems of the vehicles (2) of the vehicle fleet by

   - collecting the score values (SW1 to SW4) of the plurality of vehicles (2) of the vehicle fleet, the score values (SW1 to SW4) being determined by the vehicles (2) and each indicating a measure of a discrepancy between a driving behavior of a driver of the vehicle (2) and a driving behavior of an automated driving system at a corresponding position of the vehicle (2),
   - statistically evaluating the collected score values (SW1 to SW4) and determining, in the statistical evaluation, positions at which there is frequently a statistically relevant discrepancy between the driving behavior of the driver and the driving behavior of the automated driving system,

- adjusting parameters (P) of the control algorithms of the automated driving systems to reduce the discrepancies based on a determined accumulation of statistically relevant discrepancies, and
- making the adjusted parameters (P) available to the vehicles (2) of the vehicle fleet.

**7.** Device (12) designed to carry out a method according to claim 6.

**Revendications**

**1.** Procédé permettant de déterminer un comportement de conduite d'un conducteur par rapport à un comportement de conduite d'un système de conduite automatisé d'un véhicule (2), **caractérisé en ce que,** pendant un mode de conduite manuelle du véhicule (2),

- des instructions de réglage (SB) du conducteur et une trajectoire (r) du véhicule (2) parcourue manuellement sont détectés,
- dans un premier chemin de calcul (R1), on détermine quelles instructions de réglage automatisées le système de conduite automatisé générerait à une position réelle respectivement actuelle du véhicule (2) sur la trajectoire (r) parcourue manuellement, si le système de conduite automatisé était activé,
- dans un second chemin de calcul (R2), une trajectoire ($\beta$, $\beta'$, $\beta_0$ à $\beta_2$) du véhicule (2) que le véhicule (2) parcourrait si le système de conduite automatisé était activé est simulée, et
- en fonction des instructions de réglage (SB) détectés du conducteur ainsi que des instructions de réglage automatisées et/ou de la trajectoire (r) suivie manuellement ainsi que de la trajectoire simulée ($\beta$, $\beta'$, $\beta_0$ à $\beta_2$), au moins une valeur de score (SW1 à SW4) est déterminée en tant que mesure d'une divergence entre le comportement de conduite du conducteur et le comportement de conduite du système de conduite automatisé, dans lequel la valeur de score (SW1 à SW4) est déterminée en fonction d'une probabilité selon laquelle le système de conduite automatisé aurait déterminé à un moment antérieur ($t_0$, $t_1$, $t_2$) une trajectoire ($\beta$, $\beta'$, $\beta_0$ à $\beta_2$) en tant que trajectoire de consigne, laquelle coïncide au moins sensiblement avec la trajectoire (r) suivie manuellement.

**2.** Procédé selon la revendication 1,
**caractérisé en ce que** la valeur de score (SW1 à SW4) est déterminée en fonction d'un écart entre les instructions de réglage (SB) détectées du conducteur et les instructions de réglage automatisées.

**3.** Procédé selon la revendication 1 ou 2,
**caractérisé en ce que** la valeur de score (SW1 à SW4) est déterminée en fonction d'un écart entre la trajectoire (r) suivie manuellement et la trajectoire ($\beta$, $\beta'$, $\beta_0$ à $\beta_2$) simulée.

**4.** Procédé selon la revendication 3,
**caractérisé en ce que** la valeur de score (SW1 à SW4) est déterminée en fonction d'une durée ou d'une distance que le véhicule (2) peut parcourir jusqu'à ce que l'écart entre la trajectoire (r) suivie manuellement et la trajectoire simulée ($\beta$, $\beta'$, $\beta_0$ à $\beta_2$) atteigne un seuil ($\xi$) prédéterminé.

**5.** Procédé selon la revendication 3 ou 4,
**caractérisé en ce que** l'écart entre la trajectoire (r) suivie manuellement et la trajectoire ($\beta$, $\beta'$, $\beta_0$ à $\beta_2$) simulée est déterminé à l'aide d'au moins une fonction de coût ($\Psi$).

**6.** Procédé selon l'une des revendications précédentes,
**caractérisé en ce que**
il est utilisé dans une pluralité de véhicules (2) d'une flotte de véhicules pour déterminer une valeur de score (SW1 à SW4) respective et **en ce que** les valeurs de score (SW1 à SW4) déterminées sont utilisées pour adapter des algorithmes de régulation de systèmes de conduite automatisés des véhicules (2) de la flotte de véhicules par le fait que

- les valeurs de score (SW1 à SW4) de la pluralité de véhicules (2) de la flotte de véhicules sont collectées, dans lequel les valeurs de score (SW1 à SW4) sont déterminées par les véhicules (2) et indiquent respectivement une mesure d'une divergence entre un comportement de conduite d'un conducteur du véhicule (2) et un comportement de conduite d'un système de conduite automatisé à une position respective du véhicule (2),
- les valeurs de score (SW1 à SW4) collectées sont évaluées statistiquement et, dans l'évaluation statistique, des positions sont déterminées, auxquelles il existe fréquemment une divergence statistiquement pertinente entre le comportement de conduite du conducteur et le comportement de conduite du système de conduite automatisé,
- sur la base d'une accumulation déterminée de divergences statistiquement pertinentes, des paramètres (P) des algorithmes de régulation des systèmes de conduite automatisés sont adaptés pour réduire les divergences et
- les paramètres (P) adaptés sont mis à la disposition des véhicules (2) de la flotte de véhicules.

7. Dispositif (12), configuré pour mettre en œuvre un procédé selon la revendication 6.

FIG 1

FIG 2

FIG 3

EP 4 351 947 B1

FIG 4

FIG 5

FIG 6

FIG 7

FIG 8

FIG 9

EP 4 351 947 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015218361 A1
- DE 102017200180 A1
- US 2015175168 A1
- DE 102019202106 A1
- DE 102017126021 A1
- EP 3428031 A1